# EUROPEAN PATENT SPECIFICATION

(11) **EP 1 193 005 B1**
(45) Date of publication and mention of the grant of the patent: **05.04.2006**
(21) Application number: 01830547.4
(22) Date of filing: 23.08.2001
(51) Int. Cl.: B21D 43/28

(54) **Machine for cutting metal bars into sections of predeterminated length, particularly for concrete reinforcement**
Vorrichtung zum Ablängen von Metallstäben inbesondere für Betonbewehrungsstahl
Dispositif de mise à longueur de barres métalliques en particulier pour armature de beton

(30) Priority: 29.08.2000 IT TO000828; 30.03.2001 IT TO000304
(43) Date of publication of application: 03.04.2002
(73) Proprietor: OSCAM S.p.A., 10127 Torino (IT)
(72) Inventor: PERUZZO, Lorenzo, 10127 Torino (IT)
(74) Representative: Notaro, Giancarlo

(56) References cited:
- FR-A- 2 491 789
- FR-A- 2 675 065
- GB-A- 1 442 683
- US-A- 4 255 993
- US-A- 4 524 656
- US-A- 4 635 512

## Description

The present invention relates to machines for cutting metal bars into sections of predetermined length, particularly for reinforcement of concrete. A machine according to the preamble of claim 1 is known from GB 1 442 683. The applicant has for some time been producing a machine of the type specified above (see, for instance, the European patent EP-B-0 648 577), comprising a cutting channel for receiving the bars to be cut, a feed head for drawing along the bars, which is located at one end of the cutting channel and is provided with motor-driven rollers to cause the bars to advance along the channel in the longitudinal direction of the bars until the leading ends of the bars are brought up against position-adjustable stop means, and a device for cutting the bars comprising a blade, which moves vertically and is situated downstream of the feed rollers (with reference to the direction of advance of the bars), and a hydraulic cylinder for controlling vertical displacement of the blade. In the operation of this known machine, a metal bar having a circular cross section and a length of, for example, 12 metres or 24 metres, is made to advance by the feed head until it comes into contact, with its leading end, with the aforesaid stop means. The latter are positioned at a pre-chosen distance from the cutting blade, in such a way that activation of the latter gives rise to a first pre-determined length of bar. The first length thus obtained is unloaded at the side of the cutting channel, after which the remaining part of the metal bar is fed forwards again by the feed head until it again comes into contact with the aforesaid stop means and thus enables cutting of a second length of bar. The operation proceeds until the remaining last stretch of bar is made to advance until it reaches with its leading end the aforesaid stop means to enable the last cutting operation.

In the above described known machines, there exists the problem of obtaining rapidly the division of the original metal bar into sections all having different lengths. In this connection it should be pointed out that, again according to a technique in itself known, the aforesaid stop means which determine correct positioning of the bar before the cutting operation is performed typically consist of two blocks, the position of which can be adjusted in the cutting channel in the direction of feed of the bars. One first of said blocks has an active stopportion displaceable between a lowered, operative, position and a raised, inoperative, position in which it enables passage under it of the bars that are to be stopped against the second block. The aforesaid blocks are slidably mounted inside the cutting channel and are displaceable along said channel, each by means of a respective drive controlled by a respective electric motor. The blocks cannot be more than two, in so far as they must be positioned in the same guide channel with the respective drives located on either side of the channel. Consequently, with the known machine it is possible to arrange cutting of an original metal bar into a number of pieces having exclusively two possible different lengths. During operation, the bars are initially stopped against the first block, which at this stage has its active portion lowered. After the first length has been cut off, it is unloaded at the side of the machine, and then the remaining portion of the bar is fed forward until it comes into contact with the second block. This can be done after the mobile part of the first block has been raised into its inoperative position, so enabling the metal bar to slide underneath it. Of course all the operations described above are normally performed simultaneously on a number of bars that are fed along the cutting channel set alongside one another and laid out in the horizontal plane. Again in the case of the aforesaid known machine, when a third length of bar it to be cut different from the two lengths corresponding to the positioning of the two blocks, it is necessary to set one of said blocks in a new position. The operation of repositioning of the blocks, however, takes quite a long time, and consequently results in a non-negligible down time between one cutting operation and another.

The object of the present invention is to overcome the above drawback.

With a view to solving the said problem, the invention provides the machine of claim 1.

Thanks to the above characteristic, the machine according to the invention is therefore able to perform rapidly, without any down time, the division of a metal bar even into more than two lengths all having different values. The flexibility of use of the machine according to the invention is thus considerably greater than in the case of known machines.

A furhter problem encountered in the known machines is that after the second length has been cut, the situation may arise in which the residual part of the bar thus cut, i.e., the scrap part, has a length greater than the one corresponding to the second cut, i.e., the distance between the cutting device and the second block. In this case, the lateral unloading of the scrap is prevented.

In order to overcome the above-mentioned drawback and to provide a machine for cutting metal bars of the type specified previously, in which in the situation described above it is possible to unload the scrap in the longitudinal direction of the cutting channel, the amchine according to the invention is prefrably further characterized in that the second block has an active stop portion that can be displaced between a lowered active position and a raised inoperative position, in which it enables the bars to pass underneath it.

In the machines of the known type described at the beginning, there is the further problem that the last cutting operation leaves a short stretch of tail of bar unused, the said offcut consequently constituting scrap. This scrap, in the case of the aforesaid known machine, cannot be eliminated, in so far as for the last cutting operation to be performed guaranteeing exactness of the length of bar cut, it is necessary for the leading end of the stretch of bar that is to be cut to reach the aforesaid stop means before its tail end is disengaged from the motor-driven rollers of the feed head. As already mentioned above, the said rollers are located upstream of the blade, and it is not possible to reduce to less than 20-30 centimetres the distance of the cutting blade from the last roller of the feed head. It follows that the cutting operation carried out on a bar always leaves a tail offcut having a length of 25-30 centimetres. In other words, with the known machine, starting from a metal bar having a standard length, for example 12 metres, it is not possible to obtain two lengths of 6 metres each, but only one length of 6 metres and another length of 5.80 metres.

With a view to overcome this drawback, the subject of the invention is a machine having all the characteristics specified at the beginning of the present description with reference to the known machine illustrated above, and moreover characterized in that said machine comprises, in combination with the aforesaid position-adjustable stop means, an auxiliary bar-feed assembly set downstream of the cutting blade (with reference to the direction of advance of the bars). The said auxiliary feed assembly enables the metal bar to be advanced until it comes into contact with the stop means even when the tail end of the bar has been released from engagement with the motor-driven feed rollers which are located upstream of the cutting blade. Thanks to the above characteristic, it is therefore possible to cut a metal bar into a number of pre-determined lengths, without leaving any scrap. In a preferred embodiment, the aforesaid auxiliary feed assembly comprises at least one pair of counter-rotating rollers, preferably a motor-driven bottom roller and a top pressure roller. In the said preferred embodiment, the aforesaid motor-driven bottom roller is mounted in such a way that it can turn about a supporting arm projecting in cantilever fashion from the structure of the feed head and is driven in rotation by one of the rollers of the feed head by means of a chain or belt drive. The aforesaid arm is mounted so that it can oscillate on the structure of the feed head and is pushed in the direction of the top roller by means of a hydraulic cylinder.

Thanks to the above-mentioned characteristics, the auxiliary feed assembly provided in the machine according to the invention is relatively simple and economical to build and, at the same time, is efficient in terms of operation.

Further characteristics and advantages of the invention will emerge from the ensuing description with reference to the attached drawings, which are provided purely by way of non-limiting example, and in which:
- Figure **1** is a schematic side elevation of one end of the cutting machine according to the invention;
- Figure **2** is a view at an enlarged scale of a detail of Figure 1;
- Figure **3** is a front view of the detail of Figure 2;
- Figure **4** is a further, partially sectional, schematic side view of the same end of the machine illustrated in Figure 1, the said view showing, in addition to the bar-feeding head, also the two stopblocks for stopping the bars;
- Figures **5** and **6** are two sectional views according to two longitudinal planes situated on either side of the channel in which the stopblocks can slide, the said views showing the drives of the two blocks;
- Figure **7** is a view at an enlarged scale of a detail of Figure **6;**
- Figure **8** is a top plan view of the part of the machine including the two drives for controlling the stopblocks;
- Figure **9** is a cross-sectional view showing one of the two stopblocks;
- Figure **10** is a is a further schematic side elevation of the feed head of the machine according to the invention, with the cutting cylinder associated thereto;
- Figure **11** is a cross-sectional view at an enlarged scale of the cutting cylinder;
- Figure **12** is a top plan view of the cylinder of Figure 11,
- Figure **13** is a diagrammatic side elevational view of a variantof the mahine of fig. 4, and
- Figure **14** is a top plan view of the machine of fig. 13.

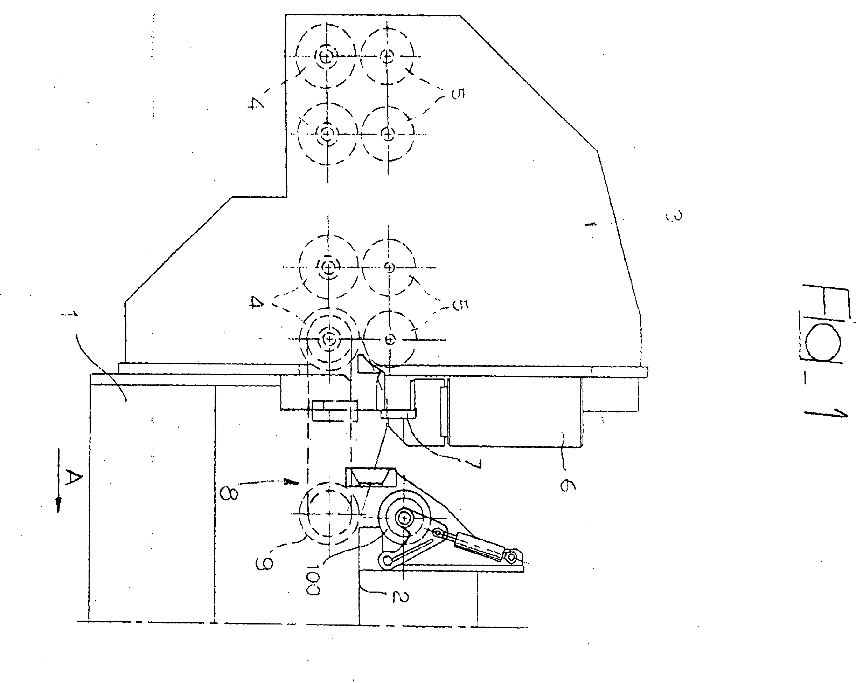

In Figure 1, the reference number 1 designates as a whole a cutting channel which extends in the direction indicated by the arrow A for a sufficient length to receive on it, along a resting surface 2, metal bars that are to be cut. The bars are fed along the surface 2 of the channel 1, in the direction of the arrow A parallel to the longitudinal direction of the bars, by a drawing or feed head 3 comprising a plurality of pairs of counter-rotating rollers 4, 5. The bottom rollers 4 are motor driven, whilst the top rollers are rollers which turn freely and which are pressed in the direction of the bottom rollers by thrust means, typically fluid cylinders. The annexed drawings do not illustrate the means for controlling the motor-driven rollers 4, nor the presser means associated to the top rollers 5, in so far as the said elements are in themselves known, and do not fall, taken by themselves, within the scope of the invention. The elimination of said items from the drawings moreover renders the latter more readily and easily understandable.

Associated to the feed head 3 is a cutting cylinder 6, consisting of a hydraulic cylinder which controls the vertical movement of a blade 7 that cuts the metal bars after the latter have been fed forwards by the rollers 4, 5 on the surface 2 of the cutting channel 1, in the direction A, until they come into contact, with their leading ends, with stop means, which will be described in detail in what follows, that are arranged in the cutting channel.

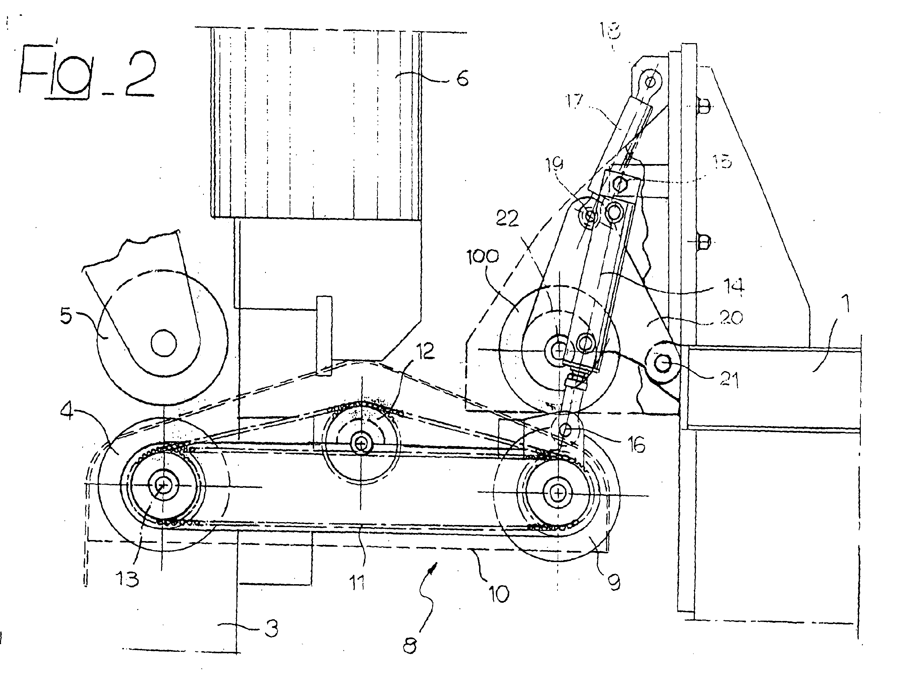

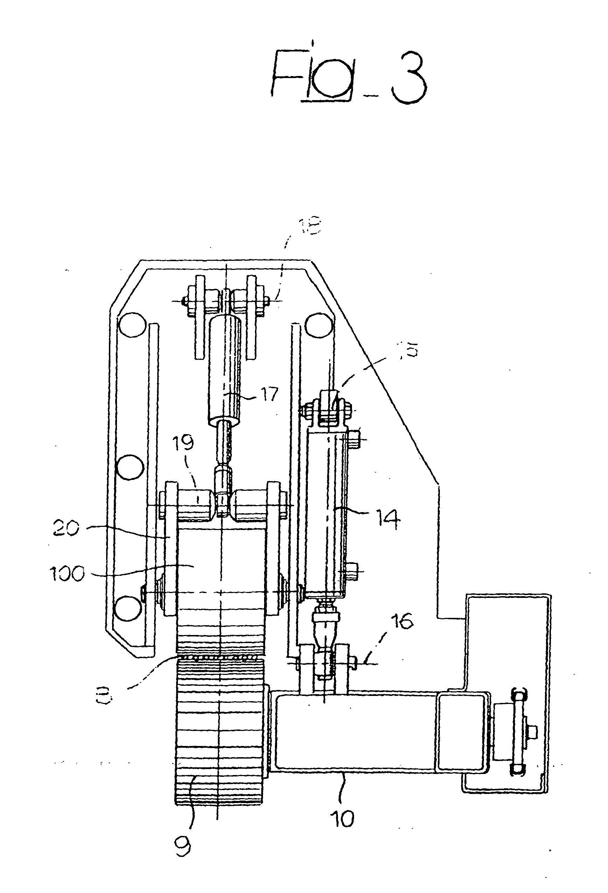

In order to prevent the last length of metal bar that is to be cut from being released from engagement with the motor-driven rollers 4, 5 that are closest to the cutting cylinder 6 when the leading end of said last length of bar has not come into contact with the above-mentioned stop means, the machine according to the invention comprises an auxiliary feed assembly 8 comprising a pair of counter-rotating rollers 9, 10. As may be clearly seen in Figures 2 and 3, the bottom roller 9 of the auxiliary feed assembly 8 is mounted, in such a way that it is free to turn, on a supporting arm 10 which projects in cantilever fashion in the direction A of the structure of the feed head 3 and which is driven in rotation by the last motor-driven roller 4 by means of a chain drive 11 which engages on gear wheels coaxial with the aforesaid roller 4, with the roller 9, and with an intermediate auxiliary roller 12. The supporting arm 10 is mounted, so that it can oscillate about the axis 13 of the last motor-driven roller 4, on the structure of the feed head 3 and is recalled upwards by a fluid cylinder 14 having one of its ends articulated in 15 and the other in 16, respectively to the fixed structure of the cutting channel 1 and to the supporting arm 10. The top roller 100 is instead pressed in the direction of the bottom roller 9 by a fluid cylinder 17 having one of its ends articulated in 18 and the other in 19, respectively to the fixed structure of the cutting channel 1 and to a lever 20, which is in turn articulated in 21 to the cutting channel 1 and which supports the top roller 100 in such a way that the latter can rotate freely about an axis 22.

As already illustrated previously, and as may be clearly seen in Figure 3, the cutting machine simultaneously processes a plurality of bars that are fed forwards in the direction A set alongside one another and laid out in a horizontal plane. The bars are designated by the letter B in Figure 3.

In the step of feeding of the bars, the auxiliary feed assembly 8 ensures that also the end stretches of the bars will continue to move forwards until the bars come into contact, with their leading ends, with the aforesaid stop means located in the cutting channel even if, in the meantime, the tail ends of the bars have been released from the engagement with the rollers 4, 5 of the feed head 3.

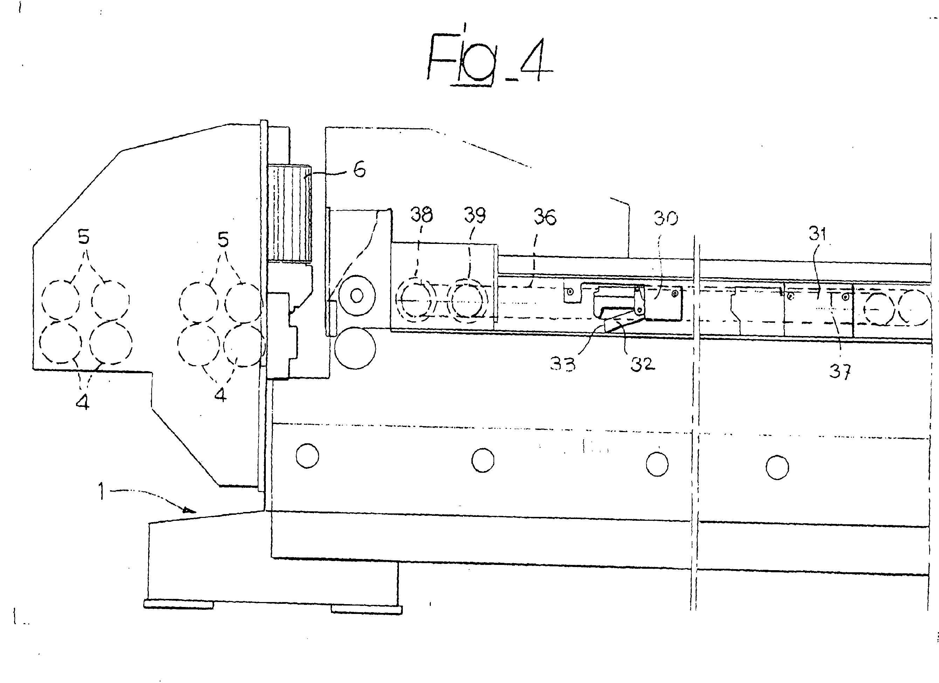

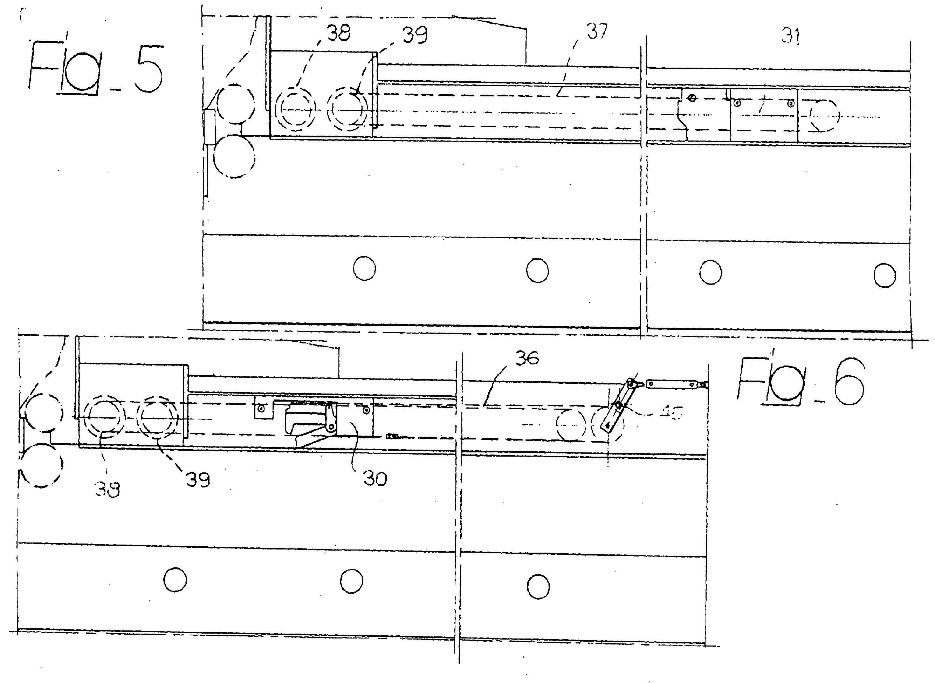

Figures 4 to 9 illustrate an example of embodiment of the aforesaid stop means for the leading ends of the bars. Said stop means consist of two blocks 30, 31 slidably mounted in the direction A along one and the same channel on the bottom of which the bars B are fed forward (see in particular Figure 9) . The block 30 has an active part 32 which can oscillate between a raised, inoperative, position and a lowered, operative, position (illustrated in Figure 4) in which one of its surfaces 33 functions as a stopsurface for the bars. The purpose of the moving part 32 is to enable use of the block 31 as an alternative to the block 30 to define the stopsurface for the leading ends of the bars. When, in fact, use of the block 31 is required, the moving part 32 of the block 30 is raised, and consequently the bars are free to slide underneath it until they come into contact with the block 31 with their leading ends. As has already been said, the two blocks 30, 31 are free to slide along the same channel (Figure 9) having a bottom wall 34 and two side walls 35, and can be position-adjusted along the direction A each by means of a respective chain drive, the said two chain drives being set on either side of the channel. The two blocks 30, 31 are in fact rigidly connected each to a respective closed-loop chain 36, 37 actuated by a respective motor 38, 39 (see also Figures 5, 6 and in particular Figure 8). Figure 7 also illustrates the control drive for the moving part 32 of the block 30. The moving part 32 is mounted on the block 30 in such a way that it can oscillate about an axis 40, and can be actuated by means of a crank 41 connected to a chain 42 which is run over a floating gear wheel 43. The gear wheel 43 is carried at one end of a rocker arm 44, which is mounted in an oscillating way about an shaft 45 carried by the fixed structure of the cutting channel and which is actuated by means of a fluid cylinder 46. Actuation of the fluid cylinder 46 causes a displacement of the idler gear 43 and a consequent rotation of the crank 41 that actuates the moving part 32.

As illustrated in Figure 8, supply of the two electric motors 38, 39 which determines the positioning of the two blocks 30, 31 in the direction A is controlled by electronic control means, indicated only schematically in the figure, which are programmed in such a way that adjustment of the position of each of the two blocks can be carried out while the operation of bringing the bars up against the other block is still in progress. In this way it is possible to avoid the down time that is required for preparing one of the two blocks for a third length that is different from either of the two distances at which the two blocks are initially positioned, so that it is possible to perform in a very short time the division of a metal bar into three or even more pieces all having different lengths. This characteristic distinguishes the machine according to the invention from known machines, in which the operations for adjusting the position of the blocks are carried out after each cutting operation, and consequently involve considerable down time in the processing cycle.

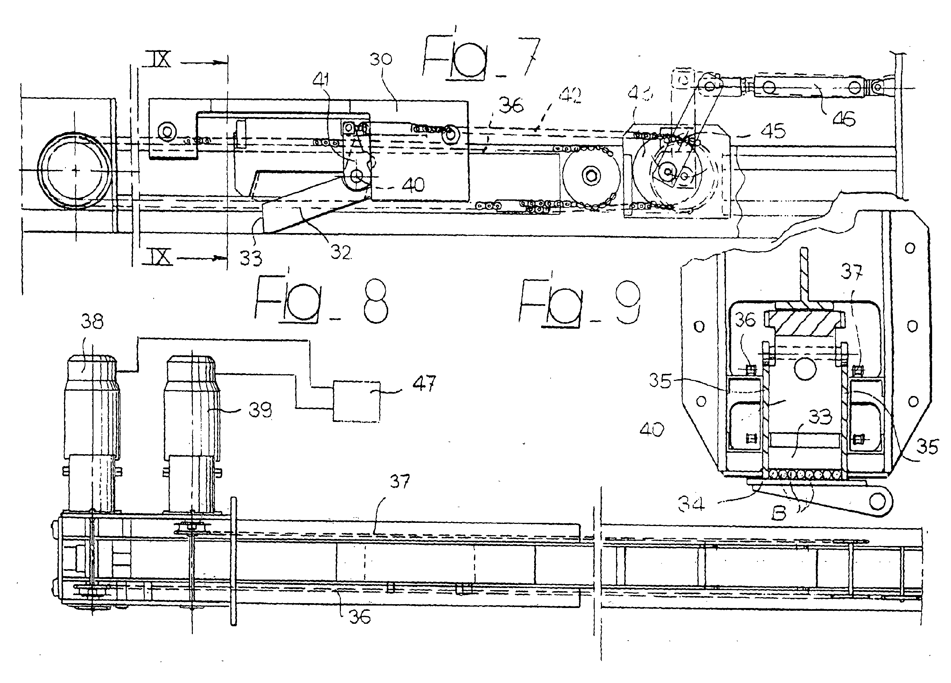

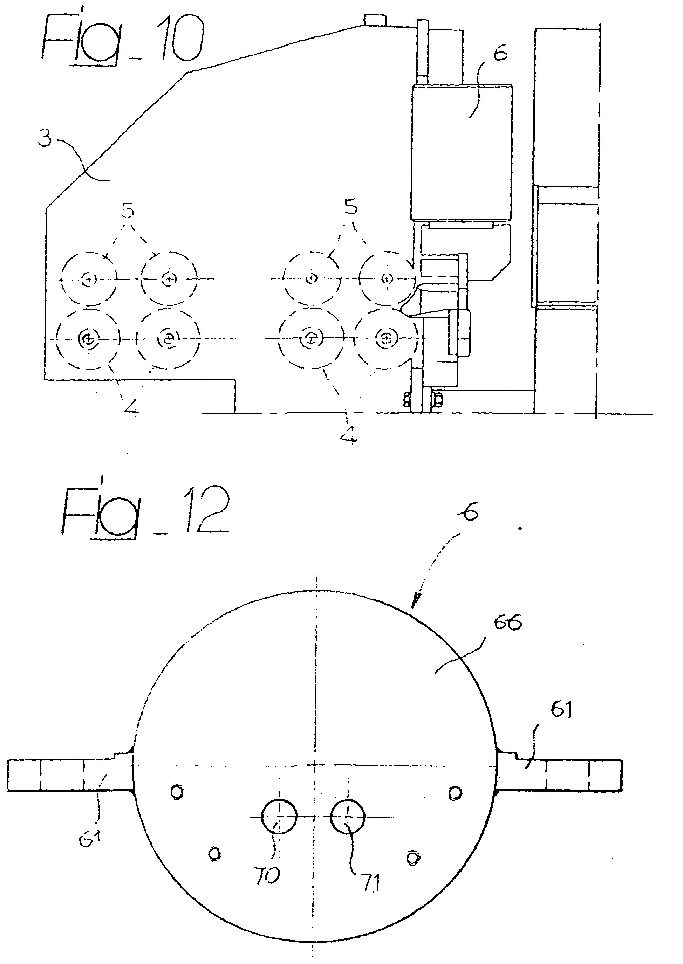

Figures 10 to 12 are detailed illustrations of the positioning and structure of the cutting cylinder 6. The cylinder 6 comprises a cylindrical body 60 provided with flanges 61 for fixing to the structure of the feed head, and a piston 62 slidably mounted inside the cylinder 60. The piston 62 is prolonged in a single piece in a stem 63 having a diameter only slightly smaller than that of the piston 62, which is slidably mounted through a fluid-tight bushing 64 arranged at one end of the cylinder 60. The stem 63 protrudes from the cylinder and is connected to the cutting blade (not illustrated), Inside the cylinder, on either side of the piston 62 there are defined the two pressure chambers of the cylinder. One first chamber 65, which is illustrated in Figure 11 in its condition of minimum volume, is defined between the top surface of the piston 62 and an end head 66 of the cylinder. The second chamber of the cylinder, designated by the reference number 67, is defined, coaxially with the stem 63, between the bottom surface 68 of the piston 62 and the end top surface 69 of the fluid-tight bushing 64. The two chambers 65, 67 are connected, respectively, to two ducts 70, 71, which in turn communicate with the hydraulic power supply unit, which is associated to the cylinder and is located immediately above the head 66. The said hydraulic power unit is in itself of a known type, and consequently is not illustrated in the annexed drawings to enable simplification of the representation. According to an important characteristic of the invention, communication between the chamber 67 and the duct 71 is without the need for ducts or pipes outside the cylinder. In fact, an axial pipe 72 which protrudes inside the cylinder is fixed to the head 66. The piston 62 and the stem 63 have a blind axial hole 73, of a diameter noticeably larger than the diameter of the axial pipe 72, in order to prevent interference with said pipe. The piston 62 is mounted in a slidable and sealed way on the pipe 72 by means of a fluid-tight bushing 74 carried by the piston. Of course, in the condition illustrated in Figure 11, the bushing 74 is in the proximity of the top end of the pipe 72, whereas at the end of the cutting stroke, the bushing 74 is displaced downwards to a distance corresponding to the stroke of the piston 62. Communication between the duct 71 and the chamber 67 is via a transverse duct 75 and an axial duct 76 made in the head 66, through the cavity of the pipe 72, through the chamber defined by the blind hole 73, and finally through one or more radial holes 77.

As already illustrated previously, thanks to the structure described above, the cutting cylinder according to the invention is characterized by an operating speed decidedly higher than that of known cylinders.

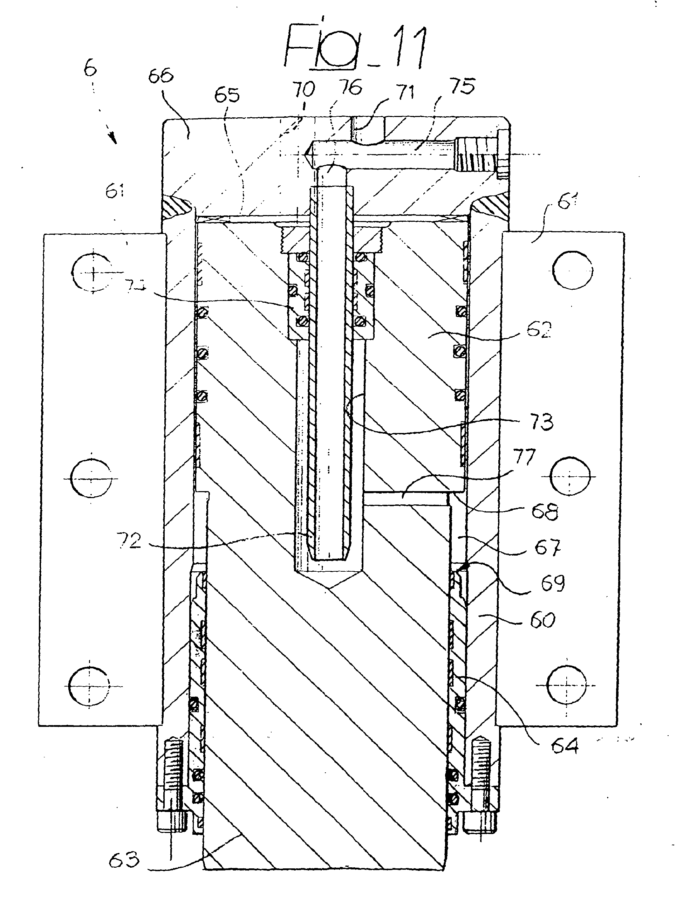

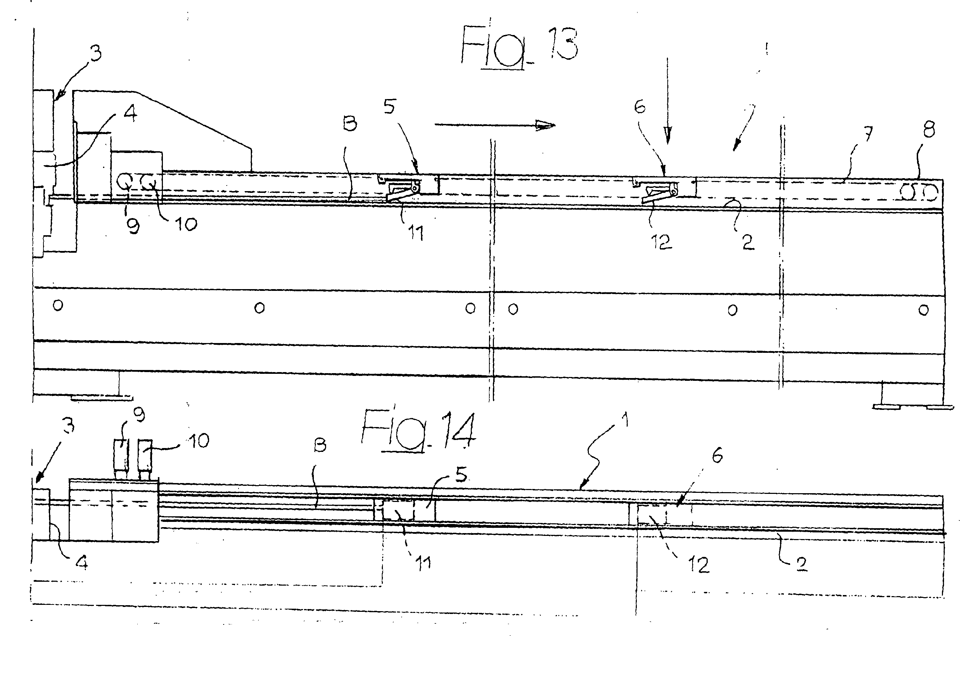

In figures 13,14, the reference number 1 designates as a whole a cutting channel which extends in the direction indicated by the arrow A for a sufficient length to receive, on a resting surface 2, metal bars B that are to be cut. The bars B are fed along the surface 2 of the channel 1, in the direction of the arrow A parallel to the longitudinal direction of the bars B, by a drawing or feed head designated as a whole by 3, the said feed head comprising a plurality of pairs of counter-rotating rollers (not shown). The arrangement may for instance be similar to the one described with reference to the previous figures. Associated to the feed head 3 is a cutting unit 4, which is not described in detail herein in so far as it corresponds to the one described and illustrated in the aforesaid prior document.

Along the cutting channel 1 two adjustable contrast elements are set which consist of a first block 5 and a second block 6, mounted so that they can slide in the direction A, one after the other, along the cutting channel 1. Sliding of the blocks 5, 6 with the purpose of adjusting their positions in the direction A, is controlled by respective closed-loop chain drives, designated as a whole by 7, 8 and governed by respective electric motors 9,10. The first block 5 has an active portion that can oscillate between a raised inoperative position and a lowered operative position (illustrated in Figure 1), in which it functions as a detent for the bars B, which during operation of the machine, advance along the surface 2 of the channel 1. The function of the mobile part 11 is to enable use of the second block 6 as an alternative to the first block 5 to define the contrast surface for the leading ends of the bars B. When, in fact, the second block 6 is to be used, the mobile part 11 of the first block 5 is raised, so that the bars B are free to slide under it until their leading ends come into contact with the second block 6.
According to the fundamental characteristic of the invention, also the second block 6 is provided with an active part 12 which oscillates between the lowered operative position (illustrated in Figure 1) and a raised inoperative position. The function of the mobile part 12 is to enable the scrap of the bars B that have a length greater than the distance between the cutting unit 4 and the second block 6 to be unloaded in the direction indicated by the arrow A along the channel 1. The conformations of the moving part 11 and of the moving part 12 are identical to one another, as likewise are identical the corresponding systems for controlling displacement between the lowered position and the raised position.

Naturally, without prejudice to the principle of the invention, the details of construction and the embodiments may vary widely with respect to what is described and illustrated herein, without thereby departing from the scope of the present invention, as defined in the claims.

## Claims

1. A machine for cutting metal bars into pre-determined lengths, comprising a cutting channel (1) for receiving the bars (B) to be cut, a drawing head (3) for feeding the bars (B), set at one end of the cutting channel (1) and provided with motor-driven rollers (4) for drawing along the bars (B) so as to cause them to advance along the channel in the longitudinal direction (A) of the bars (B) until the leading ends of the bars (B) are brought up against position-adjustable stop means (30, 31), and a cutting device (6, 7) for cutting the bars (B), in which said stop means for the leading ends of the bars (B) comprise two position-adjustable blocks (30, 31) along the cutting channel (1) in the direction (A) of advance of the bars, and in which one first (30) of said blocks has an active stop portion (32) displaceable between a lowered, active, position and a raised, inoperative, position in which it enables passage under it of the bars (B) which are to be stopped against the second block (31), said blocks being slidably mounted inside the cutting channel (1) and being displaceable along said channel, each by means of a respective drive (36, 37) controlled by a respective electric motor (38, 39),
**characterized in that** said electric motors (38, 39) are controlled by electronic control means (47) programmed for adjusting the position of each block while an operation of advance of the bars against the other block is still in progress, according to a sequence of steps optimized for obtaining more than two different lengths, starting from one and the same bar, having values that are different from one another.

2. A machine according to claim 1, **characterized in that** also the second block (6) has an active contrast portion (12), which can be displaced between a lowered active position and a raised inoperative position, in which it enables the bars (B) to slide underneath it.

3. A machine according to claim 1,
**characterized in that** said machine further comprises, in combination with said position-adjustable stop means (30, 31), an auxiliary drawing assembly (8) for feeding the bars, which is set downstream of the cutting blade device (7), with reference to the direction of advance of the bars.

4. The machine according to Claim 3, **characterized in that** the auxiliary feed assembly (8) comprises at least one pair of counter-rotating rollers (9, 100).

5. The machine according to Claim 4, **characterized in that** said pair of counter-rotating rollers (9, 100) comprises a bottom motor-driven roller (9) and a top pressure roller (100).

6. The machine according to Claim 5, **characterized in that** said bottom roller (9) is mounted so that it turn about a supporting arm (10) projecting in cantilever fashion from the structure of the feed head (3), and is driven in rotation by one of the rollers (4) of the feed head (3) by means of a chain or belt drive (11).

7. The machine according to Claim 6, **characterized in that** said arm (10) is mounted so that it can oscillate on the structure of the feed head (3) and is pushed in the direction of the top roller (100) by means of a fluid cylinder (14).

## Patentansprüche

1. Maschine zum Ablängen von Metallstangen in vorab bestimmte Längen, umfassend einen Schneidkanal (1) zur Aufnahme der zu schneidenden Stangen (B), einen Ziehkopf (3) zum Zuführen der Stangen (B), der an einem Ende des Schneidkanals (1) eingestellt ist und mit motorangetriebenen Walzen (4) zum Verlaufen entlang der Stangen (B) vorgesehen ist, um so zu bewirken, dass die Stangen (B) entlang des Kanals in Längsrichtung (A) der Stangen (B) fortlaufen, bis die führenden Enden der Stangen (B) gegen in der Position einstellbare Stopperelemente (30, 31) gebracht werden, sowie eine Schneidvorrichtung (6, 7) zum Schneiden der Stangen (B), wobei das Stopperelement für die führenden Enden der Stangen (B) zwei in der Position einstellbare Blockierungen (30, 31) entlang des Führungskanals (1) in Richtung (A) des Fortlaufs der Stangen umfasst, und wobei ein erster (30) dieser Blöcke einen aktiven Stoppabschnitt (32) aufweist, der zwischen einer abgesenkten, aktiven Position und einer angehobenen, inaktiven Position bei der dieser den Durchgang der Stangen (B) unter diesem ermöglicht, welche vom zweiten Block (31) zu stoppen sind, verschiebbar ist, wobei diese Blöcke jeweils mittels eines jeweiligen Antriebs (36, 37), der von einem jeweiligen elektrischen Motor (38, 39) gesteuert wird, gleitbar innerhalb des Schneidkanals (1) befestigt sind und entlang dieses Kanals verschiebbar sind,
**dadurch gekennzeichnet, dass** diese elektrischen Motoren (38, 39) mittels eines elektronischen Steuerungselements (47) gesteuert werden, welches zum Einstellen der Position jedes Blocks programmiert sind, während ein Betrieb des Fortlaufs der Stangen gegen den anderen Block immer noch andauert, gemäß einer Abfolge von Schritten, die zur Erzielung von mehr als zwei unterschiedlichen Längen mit zueinander unterschiedlichen Werten, beginnend von ein und derselben Stange, optimiert sind.

2. Maschine gemäß Anspruch 1, **dadurch gekennzeichnet, dass** auch der zweite Block (6) einen aktiven Kontaktabschnitt (12) aufweist, der zwischen einer abgesenkten aktiven Position sowie einer angehobenen inaktiven Position, in der den Stangen (B) ermöglicht wird, unterhalb dieses Abschnitts zu gleiten, verschoben werden kann.

3. Maschine gemäß Anspruch 1, **dadurch gekennzeichnet, dass** die Maschine des Weiteren in Kombination mit den in der Position einstellbaren Stopperelementen (30, 31) eine Hilfs-Zuganordnung (8) zum Zuführen der Stangen umfasst, die stromabwärts der Schneidvorrichtung (7) in Bezug auf die Richtung des Fortlaufs der Stangen eingestellt ist.

4. Maschine gemäß Anspruch 3, **dadurch gekennzeichnet, dass** die Hilfs-Zufuhranordnung (8) zumindest ein Paar von sich im Gegensinn drehenden Walzen (9, 100) umfasst.

5. Maschine gemäß Anspruch 4, **dadurch gekennzeichnet, dass** das Paar von sich im Gegensinn drehenden Walzen (9, 100) eine motorangetriebene Bodenwalze (9) sowie eine obere Druckwalze (100) umfasst.

6. Maschine gemäß Anspruch 5, **dadurch gekennzeichnet, dass** die Bodenwalze (9) derart befestigt ist, dass sie sich um einen Stützarm (100) dreht, der in freitragender Weise von dem Aufbau des Zufuhrkopfs (3) hervorsteht und durch eine der Walzen (4) des Zufuhrkopfs (3) mittels einer Kette oder eines Antriebsriemens (11) in Rotation angetrieben wird.

7. Maschine gemäß Anspruch 6, **dadurch gekennzeichnet, dass** der Arm (10) derart befestigt ist, dass er auf der Struktur des Zufuhrkopfs (3) oszillieren kann und in der Richtung der oberen Walze (100) mittels eines Fluidzylinders (14) gedrückt wird.

## Revendications

1. Machine destinée à découper des barres métalliques en des longueurs prédéterminées, comprenant un canal de découpe (1) destiné à recevoir les barres (B), une tête de tirage (3) destinée à amener les barres (B), établie à une première extrémité du canal de découpe (1) et dotée de rouleaux (4) entraînés par un moteur afin de tirer les barres (B) de façon à les amener à avancer le long du canal dans le sens longitudinal (A) des barres (B) jusqu'à ce que les extrémités de tête des barres (B) soit amené contre un moyen d'arrêt réglable en position (30, 31), ainsi qu'un dispositif de découpe (6, 7) destiné à couper les barres (B), dans laquelle ledit moyen d'arrêt destiné aux extrémités de tête des barres (B) comprend deux blocs réglables en position (30, 31) le long du canal de découpe (1) dans le sens (A) d'avance des barres et dans lequel un premier bloc (30) desdits blocs comportent une partie d'arrêt active (32) pouvant se déplacer entre une position abaissée, active et une position élevée, inactive, dans laquelle elle permet le passage sous elle des barres (B) qui doivent être arrêtées contre le second bloc (31), lesdits blocs étant montés en coulissement à l'intérieur du canal de découpe (1) et pouvant se déplacer le long dudit canal, chacun au moyen d'un dispositif d'entraînement respectif (36, 37) commandé par un moteur électrique respectif (38, 39),
**caractérisée en ce que** lesdits moteurs électriques (38, 39) sont commandés par un moyen de commande électronique (47) programmé pour ajuster la position de chaque bloc alors qu'une opération d'avance des barres contre l'autre bloc est toujours en cours, en fonction d'une séquence d'étapes optimisée pour obtenir plus de deux longueurs différentes, débutant à partir d'une et d'une seule barre, présentant des valeurs qui sont différentes les unes des autres.

2. Machine selon la revendication 1, **caractérisée en ce que** le second bloc (6) comporte également une partie de démarcation active (12) qui peut être déplacée entre une position abaissée active et une position élevée inactive, dans laquelle elle permet aux barres (B) de glisser en dessous d'elle.

3. Machine selon la revendication 1,
**caractérisée en ce que** ladite machine comprend en outre, combiné avec ledit moyen d'arrêt réglable en position (30, 31), un ensemble de tirage auxiliaire (8) destiné à amener les barres, lequel est établi en aval du dispositif de découpe (7), en faisant référence au sens d'avance des barres.

4. Machine selon la revendication 3, **caractérisée en ce que** l'ensemble d'amenée auxiliaire (8) comprend au moins une paire de rouleaux en rotation inverse (9, 100).

5. Machine selon la revendication 4, **caractérisée en ce que** ladite paire de rouleaux en rotation inverse (9, 100) comprend un rouleau inférieur entraîné par un moteur (9) et un rouleau supérieur de pression (100).

6. Machine selon la revendication 5, **caractérisée en ce que** ledit rouleau inférieur (9) est monté de telle sorte qu'il tourne autour d'un bras de support (10) dépassant en porte-à-faux de la structure de la tête d'amenée (3), et qu'il est entraîné en rotation par un des rouleaux (4) de la tête d'amenée (3) au moyen d'un entraînement (11) par chaîne ou par courroie.

7. Machine selon la revendication 6 **caractérisée** pour ce que ledit bras (10) est monté de telle sorte qu'il peut osciller sur la structure de la tête d'amenée (3) et qu'il est poussé dans la direction du rouleau supérieur (100) au moyen d'un vérin hydraulique (14).
